# EUROPEAN PATENT APPLICATION

(11) **EP 4 572 480 A1**
(43) Date of publication of application: **18.06.2025**
(21) Application number: 23870746.7
(22) Date of filing: 25.09.2023
(51) Int. Cl.: H04W 72/0446

(54) **COMMUNICATION METHOD AND APPARATUS**

(30) Priority: 30.09.2022 CN 202211231747
(71) Applicant: Huawei Technologies Co., Ltd., Shenzhen, Guangdong 518129 (CN)
(72) Inventor: MA, Yunsi, Shenzhen, Guangdong 518129 (CN); RUAN, Wei, Shenzhen, Guangdong 518129 (CN); TANG, Yunshuai, Shenzhen, Guangdong 518129 (CN)
(74) Representative: Körber, Martin Hans
(86) International application number: PCT/CN2023/121213
(87) International publication number: WO 2024/067517

(57) **Abstract**

This application relates to the field of communication technologies, and discloses a communication method and apparatus. The method includes: A first communication apparatus transmits a first frame, where the first frame includes first indication information, the first indication information indicates a first time domain resource allocated to a second communication apparatus from a time domain resource set, and the time domain resource set includes a time domain resource used to perform beamforming training in an association process; and the first communication apparatus communicates with the second communication apparatus on the first time domain resource. According to the method, the first communication apparatus may indicate, to the second communication apparatus, a time domain resource allocated to the second communication apparatus from the time domain resource set. Compared with a manner in which a plurality of communication apparatuses select time domain resources from the time domain resource set through contention, this method can avoid a communication exception caused by a contention conflict, and improve communication efficiency between the first communication apparatus and the second communication apparatus.

## Description

### CROSS-REFERENCE TO RELATED APPLICATIONS

This application claims priority to Chinese Patent Application No. 202211231747.9, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, most devices in a wireless local area network (wireless local area network, WLAN) operate in low frequency bands. As more devices use the low frequency bands, spectrum resources in the low frequency bands become very crowded. Therefore, a current focus is on using high frequency bands (for example, a millimeter-wave band) to obtain more abundant available spectrum resources.

A beacon interval (beacon interval, BI) is introduced into high frequency communication protocols (such as 802.11ad and 802.11ay) of the Institute of Electrical and Electronics Engineers (institute of electrical and electronics engineers, IEEE). An access point (access point, AP) may transmit a directional multi-gigabit (directional multi-gigabit, DMG) beacon frame (beacon frame) in a beacon transmission interval (beacon transmission interval, BTI) in the beacon interval, and the DMG beacon frame may include duration of an association beamforming training (association beamforming training, A-BFT) interval in the beacon interval. Correspondingly, after receiving the DMG beacon frame, a plurality of stations (stations, STAs) may select slots in the A-BFT interval through contention, and communicate with the AP in the selected slots.

However, when the plurality of STAs select the slots in the A-BFT interval through contention, a contention conflict may occur. As a result, communication between the STAs and the AP is affected.

### SUMMARY

This application provides a communication method and apparatus, so that an AP can allocate a time domain resource to a STA from a time domain resource set. This avoids a contention conflict caused when a plurality of STAs select time domain resources from the time domain resource set through contention.

According to a first aspect, an embodiment of this application provides a communication method, and the method may be applied to a first communication apparatus. In the method, the first communication apparatus transmits a first frame, where the first frame includes first indication information, the first indication information indicates a first time domain resource allocated to a second communication apparatus from a time domain resource set, and the time domain resource set includes a time domain resource used to perform beamforming training in an association process; and the first communication apparatus communicates with the second communication apparatus on the first time domain resource.

According to the method, the first communication apparatus may indicate, to the second communication apparatus, a time domain resource allocated to the second communication apparatus from the time domain resource set. Compared with a manner in which a plurality of communication apparatuses select time domain resources from the time domain resource set through contention, this method can avoid a communication exception caused by a contention conflict, and improve communication efficiency between the first communication apparatus and the second communication apparatus. In addition, when the plurality of communication apparatuses select slots from the time domain resource set through contention, some slots may not be selected. As a result, resources are wasted. However, according to the foregoing method, the first communication apparatus allocates the time domain resource to the second communication apparatus, so that a waste of resources caused by contention can be avoided, and utilization of time domain resources in the time domain resource set can be improved.

In a possible design, that the first communication apparatus communicates with the second communication apparatus on the first time domain resource includes: The first communication apparatus receives a second frame from the second communication apparatus on the first time domain resource, where the second frame is used for first beamforming training.

In a possible design, that the first communication apparatus communicates with the second communication apparatus on the first time domain resource further includes: The first communication apparatus transmits a third frame to the second communication apparatus on the first time domain resource, where the third frame includes feedback information of the first beamforming training.

In a possible design, that the first communication apparatus transmits the first frame includes: The first communication apparatus transmits the first frame on a first frequency domain resource or a second frequency domain resource, where a frequency corresponding to the first frequency domain resource is less than a frequency corresponding to the second frequency domain resource.

In a possible design, when the first communication apparatus transmits the first frame on the second frequency domain resource, the first frame is further used for second beamforming training.

In this way, the first indication information may be transmitted to the second communication apparatus by using a frame for beamforming training. This is easy to implement. In addition, an AP does not need to transmit the first indication information by using an additional frame, thereby saving transmission resources.

In a possible design, the first frame further includes second indication information, and the second indication information indicates a second time domain resource allocated to a third communication apparatus from the time domain resource set.

In this way, the first communication apparatus may transmit the first frame in a broadcast or multicast manner, and the first frame includes information about time domain resources allocated to a plurality of communication apparatuses. This improves transmission efficiency.

In a possible design, when the first communication apparatus transmits the first frame on the first frequency domain resource, the method further includes: The first communication apparatus transmits a fourth frame on the second frequency domain resource, where the fourth frame is used for second beamforming training.

In a possible design, before the first communication apparatus transmits the first frame on the first frequency domain resource or the second frequency domain resource, the method further includes: The first communication apparatus transmits a fourth frame on the second frequency domain resource, where the fourth frame is used for second beamforming training; and the first communication apparatus receives a fifth frame from the second communication apparatus on the first frequency domain resource, where the fifth frame includes feedback information of the second beamforming training.

In this way, when both the first communication apparatus and the second communication apparatus are DBDC devices, the first communication apparatus may learn, based on the feedback information that is for the second beamforming training and that is included in the fifth frame, that the second communication apparatus supports a high frequency link, and may further allocate a time domain resource to the second communication apparatus from the time domain resource set.

In a possible design, the feedback information indicates an optimal transmit antenna and/or an optimal transmit sector that are/is of the first communication apparatus on the second frequency domain resource and that correspond/corresponds to the second communication apparatus; and that the first communication apparatus transmits the first frame on the second frequency domain resource includes: The first communication apparatus transmits the first frame on the second frequency domain resource based on the optimal transmit antenna and/or the optimal transmit sector.

In this way, the first communication apparatus may transmit the first frame to a first STA in the optimal transmit sector on the second frequency domain resource through the optimal transmit antenna, to increase a communication distance.

According to a second aspect, an embodiment of this application provides a communication method, and the method may be applied to a second communication apparatus. In the method, the second communication apparatus receives a first frame from a first communication apparatus, where the first frame includes first indication information, the first indication information indicates a first time domain resource allocated to the second communication apparatus from a time domain resource set, and the time domain resource set includes a time domain resource used to perform beamforming training in an association process; and the second communication apparatus communicates with the first communication apparatus on the first time domain resource.

In a possible design, that the second communication apparatus communicates with the first communication apparatus on the first time domain resource includes: The second communication apparatus transmits a second frame to the first communication apparatus on the first time domain resource, where the second frame is used for first beamforming training.

In a possible design, that the second communication apparatus communicates with the first communication apparatus on the first time domain resource further includes: The second communication apparatus receives a third frame from the first communication apparatus on the first time domain resource, where the third frame includes feedback information of the first beamforming training.

In a possible design, that the second communication apparatus receives the first frame from the first communication apparatus includes: The second communication apparatus receives the first frame from the first communication apparatus on a first frequency domain resource or a second frequency domain resource, where a frequency corresponding to the first frequency domain resource is less than a frequency corresponding to the second frequency domain resource.

In a possible design, when the second communication apparatus receives the first frame from the first communication apparatus on the second frequency domain resource, the first frame is further used for second beamforming training.

In a possible design, when the second communication apparatus receives the first frame from the first communication apparatus on the first frequency domain resource, the method further includes: The second communication apparatus receives a fourth frame from the first communication apparatus on the second frequency domain resource, where the fourth frame is used for second beamforming training.

In a possible design, before the second communication apparatus receives the first frame from the first communication apparatus on the first frequency domain resource or the second frequency domain resource, the method further includes: The second communication apparatus receives a fourth frame from the first communication apparatus on the second frequency domain resource, where the fourth frame is used for second beamforming training; and the second communication apparatus transmits a fifth frame to the first communication apparatus on the first frequency domain resource, where the fifth frame includes feedback information of the second beamforming training.

It may be understood that the method described in the second aspect corresponds to the method described in the first aspect. For beneficial effects of related technical features in the second aspect, refer to descriptions in the first aspect. Details are not described again.

According to a third aspect, this application provides a communication apparatus. The communication apparatus has a function of implementing the first aspect or the second aspect. For example, the communication apparatus includes a corresponding module, unit, or means (means) for performing an operation in the first aspect or the second aspect. The module, unit, or means may be implemented by using software, may be implemented by using hardware, or may be implemented by hardware by executing corresponding software.

In a possible design, the communication apparatus includes a processing unit and a communication unit. The communication unit may be configured to receive/transmit a signal, to implement communication between the communication apparatus and another apparatus. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be coupled to a memory. The memory may store a necessary computer program or necessary instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and a memory, and the memory may store a necessary computer program or necessary instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and an interface circuit, and the processor is configured to: communicate with another apparatus via the interface circuit, and perform the method in any possible design or implementation of the first aspect or the second aspect.

It may be understood that in the third aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner of disposing the memory and the processor are not limited in this embodiment of this application.

According to a fourth aspect, this application provides a communication system. The communication system may include a first communication apparatus and a second communication apparatus. The first communication apparatus is configured to perform the communication method provided in the first aspect, and the second communication apparatus is configured to perform the communication method provided in the second aspect.

According to a fifth aspect, this application provides a computer-readable storage medium. The computer-readable storage medium stores computer-readable instructions, and when a computer reads and executes the computer-readable instructions, the computer is enabled to perform the method in any one of the possible designs of the first aspect or the second aspect.

According to a sixth aspect, this application provides a computer program product. When a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture to which an embodiment of this application is applicable;
FIG. 2 is a diagram of an AP MLD according to an embodiment of this application;
FIG. 3 is a diagram of links between an AP MLD and a non-AP MLD according to an embodiment of this application;
FIG. 4 is a diagram of a possible SLS process according to an embodiment of this application;
FIG. 5 shows an example of a structure of a beacon interval according to an embodiment of this application;
FIG. 6 is a schematic flowchart corresponding to a communication method according to Embodiment 1 of this application;
FIG. 7 is a schematic flowchart corresponding to a communication method according to Embodiment 2 of this application;
FIG. 8 shows an example of a structure of a DMG beacon frame according to an embodiment of this application;
FIG. 9A and FIG. 9B each are a schematic flowchart corresponding to a communication method according to Embodiment 3 of this application;
FIG. 10 is a diagram of a structure of a first frame according to an embodiment of this application;
FIG. 11A and FIG. 11B each are a schematic flowchart corresponding to a communication method according to Embodiment 4 of this application;
FIG. 12 is a possible example block diagram of an apparatus according to an embodiment of this application;
FIG. 13 is a diagram of a structure of an AP according to an embodiment of this application; and
FIG. 14 is a diagram of a structure of a STA according to an embodiment of this application.

### DESCRIPTION OF EMBODIMENTS

The following describes technical solutions in embodiments of this application with reference to accompanying drawings in embodiments of this application.

Embodiments of this application may be applied to a WLAN, for example, may be applied to any protocol in the IEEE 802.11 series protocols currently used by the WLAN. The WLAN may include one or more basic service sets (basic service set, BSS), and network nodes in the basic service set include an AP and a STA. In addition, IEEE 802.11ad introduces a personal basic service set (personal basic service set, PBSS) and a personal basic service set control point (PBSS control point, PCP) on a basis of the original BSS. Each personal basic service set may include one AP/PCP and a plurality of non-APs/PCPs associated with the AP/PCP. In embodiments of this application, the non-AP/PCP may be referred to as a STA, and the PCP may be understood as a name of a role of the AP in the PBSS.

Embodiments of this application may be also applicable to a wireless local area network such as an internet of things (internet of things, IoT) network or a vehicle to everything (vehicle to X, V2X) network. Certainly, embodiments of this application may be further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, a future evolved communication system, and the like.

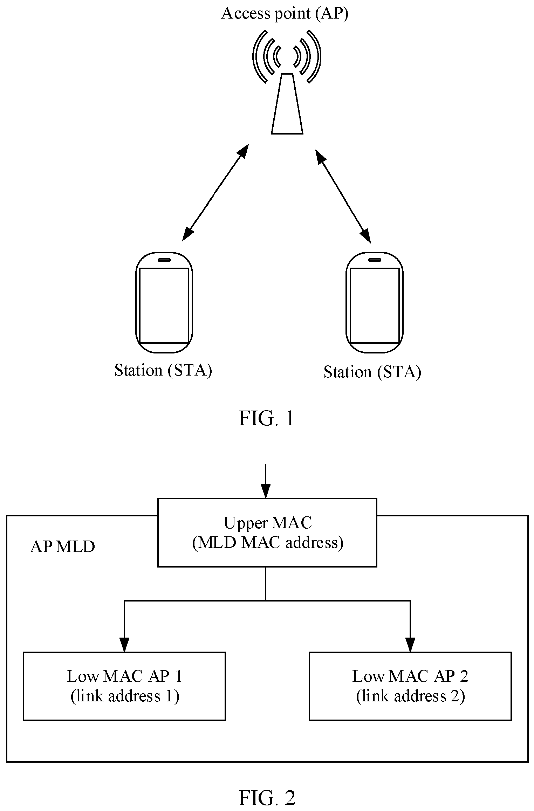

The following uses an example in which embodiments of this application are applicable to a WLAN. FIG. 1 is a diagram of a network architecture of a WLAN to which an embodiment of this application is applicable. In FIG. 1, an example in which the WLAN includes one AP and two STAs is used. A STA associated with the AP can receive a radio frame transmitted by the AP, and can also transmit a radio frame to the AP. Embodiments of this application are described by using communication between the AP and the STA as an example. It may be understood that embodiments of this application may also be applicable to communication between APs, for example, the APs may communicate with each other through a distributed system (distributed system, DS), and may also be applicable to communication between STAs.

The AP may be an access point for a terminal device (such as a mobile phone) to access a wired (or wireless) network, and is mainly deployed at home, in a building, and in a campus. A typical coverage radius of the AP is tens of meters to hundreds of meters. Certainly, the AP may alternatively be deployed outdoors. The AP is equivalent to a bridge that connects a wired network and a wireless network, and a main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802. 11be.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, or a computer that supports a Wi-Fi communication function. Optionally, the STA may support the 802.11be standard, or may support a plurality of WLAN standards of the 802.11 family, such as 802.11ax, 802.11ay, 802.11ac, 802.11n, 802.11g, 802.11b, 802.11a, and a next generation of 802. 11be.

It may be understood that quantities of APs and STAs shown in FIG. 1 are merely examples, and there may be more or fewer APs and STAs.

The AP and the STAs in FIG. 1 may be communication apparatuses having a dual-mode communication function, that is, may be communication apparatuses having a low frequency (low frequency, LF) frequency band (or channel or link) communication mode and a high frequency (high frequency, HF) frequency band communication mode. Low frequency bands include, for example, sub 1 gigahertz (GHz), 2.4 GHz, 5 GHz, and 6 GHz, and high frequency bands include, for example, 60 GHz.

For example, a communication apparatus having the dual-mode communication function may be a dual-band dual-concurrent (dual-band dual-concurrent, DBDC) device, or may be a multi-link device (multi-link device, MLD), which are described separately in the following.

### (1) DBDC device

The DBDC device integrates two sets of independent and complete links, and includes two sets of baseband processors and radio frequency front ends. Therefore, the DBDC device can operate independently in two frequency bands.

When both an AP and a STA are DBDC devices, for example, the AP is a DBDC device 1, and the STA is a DBDC device 2, the AP and the STA may exchange signaling on a low frequency link, to establish a low frequency link connection, and exchange signaling on a high frequency link, to establish a high frequency link connection.

### (2) MLD

In the IEEE 802.11be protocol, the MLD supports multi-link operation technologies, and the MLD has a plurality of radio frequency modules that separately operate in different frequency bands. For example, frequency bands in which the MLD operates may be all or a part of sub 1 GHz, 2.4 GHz, 5 GHz, 6 GHz, and a high frequency 60 GHz. The MLD may include an AP MLD and/or a non-access point (non-AP) MLD. For example, the non-AP MLD may be a STAMLD.

The AP MLD is used as an example. The AP MLD may include one or more affiliated (affiliated) stations, and each affiliated station has a respective media access control (media access control, MAC) address (address). As shown in FIG. 2, affiliated stations of an AP MLD include an AP 1 and an AP 2, a low (low) MAC address of the AP 1 is a link address 1, and a low MAC address of the AP 2 is a link address 2. In addition, the AP MLD also has an upper (upper) MAC address, which is referred to an MLD MAC address.

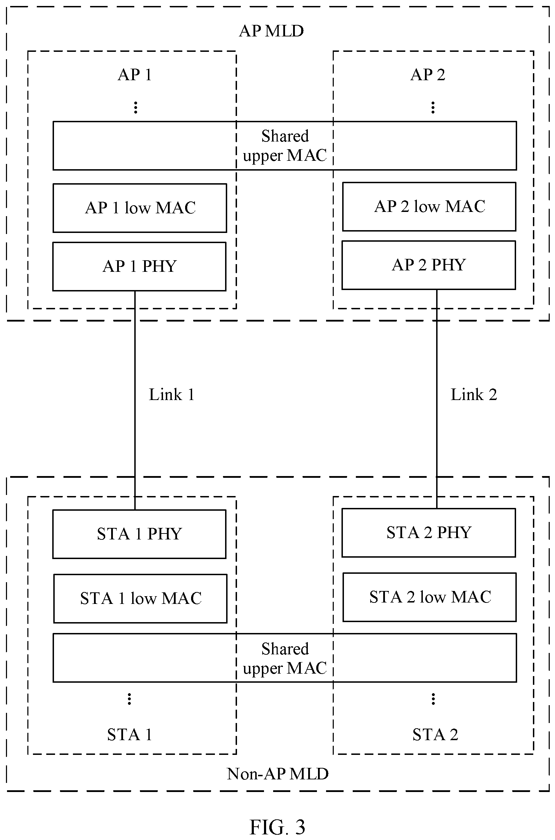

The AP MLD and the non-AP MLD may establish a multi-link connection by exchanging signaling on a low frequency link. As shown in FIG. 3, an AP MLD includes an AP 1 and an AP 2, the AP 1 includes an AP 1 PHY, an AP 1 low MAC, and an upper MAC, the AP 2 includes an AP 2 PHY, an AP 2 low MAC, and the upper MAC, and the AP 1 and the AP 2 share the upper MAC; and a non-AP MLD includes a STA 1 and a STA 2, the STA 1 includes a STA 1 PHY, a STA 1 low MAC, and an upper MAC, the STA 2 includes a STA 2 PHY, a STA 2 low MAC, and the upper MAC, the STA 1 and the STA 2 share the upper MAC, the AP 1 and the STA 1 are connected through a link 1, and the AP 2 and the STA 2 are connected through a link 2.

When a plurality of links are established, the non-AP MLD transmits an association request (association request) frame on the link 1, and the association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD transmits an association response (association response) frame on the link 1, and the association response frame carries AP-side information on a link 1 side and AP-side information of the link 2. In this way, the STA 1 and the STA 2 in the non-AP MLD respectively establish an association with the AP 1 and the AP 2 in the AP MLD.

The following first describes related technical features in embodiments of this application. These explanations are intended to facilitate understanding of embodiments of this application, and should not be considered as a limitation on the protection scope claimed in this application.

### (1) Beamforming training

Because a path loss of a high frequency band is large, beamforming training needs to be performed when different devices communicate with each other in the high frequency band. In the network architecture shown in FIG. 1, when the AP initiates beamforming training, the AP may be referred to as an initiator (initiator), and the STA may be referred to as a responder (responder); or when the STA initiates beamforming training, the STA may be referred to as an initiator, and the AP may be referred to as a responder. In other words, a party that initiates beamforming training may be referred to as an initiator, and a party that responds to the beamforming training may be referred to as a responder. Optionally, in some other possible scenarios, a party that initiates beamforming training may be referred to as a responder, and a party that responds to the beamforming training may be referred to as an initiator. Alternatively, a party in beamforming training is always referred to as an initiator, and the other party in the beamforming training is always referred to as a responder; the initiator initiates beamforming training, or may respond to beamforming training initiated by the responder; and similarly, the responder also initiates beamforming training, and may also respond to beamforming training initiated by the initiator.

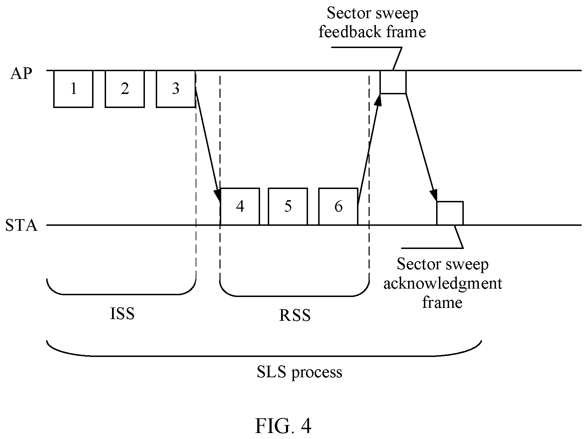

In high frequency communication protocols (for example, the 802.11ad and 802.11ay protocols), beamforming training may include a sector level sweep (sector level sweep, SLS) process and/or a beam refinement protocol (beam refinement protocol, BRP) process. FIG. 4 is a diagram of a possible SLS process. As shown in FIG. 4, the SLS process includes four phases: an initiator sector sweep (initiator sector sweep, ISS) phase, a responder sector sweep (responder sector sweep, RSS) phase, a transmission phase of a sector sweep (sector sweep, SSW) feedback (feedback) frame, and a transmission phase of a sector sweep acknowledgment (SSW acknowledgment, SSW Ack) frame. A basic link between an initiator and a responder is established through the four phases, the initiator may obtain an optimal transmit sector and an optimal receive sector that are of the initiator and that correspond to the responder, and the responder may also obtain an optimal transmit sector and an optimal receive sector that are of the responder and that correspond to the initiator, that is, a transmit beam and a receive beam may be selected, and gains of the transmit beam and the receive beam may be used. In embodiments of this application, an example in which an AP is an initiator and a STA is a responder is used.

The following separately describes the four phases in detail.

### (1.1) ISS phase

The ISS phase may include an initiator transmit sector sweep (initiator transmission of sector sweep, I-TXSS) subphase and/or an initiator receive sector sweep (initiator reception of sector sweep, I-RXSS) subphase. FIG. 4 is illustrated by using an example in which the ISS phase includes the I-TXSS subphase.

In the I-TXSS subphase, an AP may directionally transmit a plurality of SSW frames in a high frequency band, for example, an SSW frame 1, an SSW frame 2, and an SSW frame 3, to perform transmit sector training of the AP. For example, the AP may transmit one or more SSW frames in each of a plurality of transmit directions of the AP, and each transmit direction may correspond to one transmit antenna and one transmit sector of the transmit antenna. Correspondingly, a STA may quasi-omnidirectionally receive at least one SSW frame from the AP in the high frequency band, and then the STA may determine an optimal transmit antenna and an optimal transmit sector that are of the AP and that correspond to the STA, and feed back, to the AP, an identifier of the optimal transmit antenna and an identifier of the optimal transmit sector (for example, the identifiers may be fed back to the AP by using an SSW frame in the R-TXSS subphase).

In the I-RXSS subphase, the AP may quasi-omnidirectionally transmit a plurality of SSW frames in a high frequency band, to perform receive sector training of the AP; and correspondingly, the STA may directionally receive at least one SSW frame in the high frequency band, and then the STA may determine, based on receiving quality of the at least one SSW frame, an optimal receive antenna and an optimal receive sector that are of the STA and that correspond to the AP.

For example, the receiving quality of the SSW frame may include at least one of the following: received signal power or strength, a signal to interference plus noise ratio (signal to interference plus noise ratio, SINR), a bit error rate, and the like.

It may be understood that the ISS (that is, the I-TXSS and/or the I-RXSS) may also be referred to as downlink beamforming training (downlink beamforming training, DL BFT). The optimal transmit antenna and the optimal transmit sector that are of the AP and that correspond to the STA are an optimal downlink transmit antenna and an optimal downlink transmit sector. The optimal receive antenna and the optimal receive sector that are of the STA and that correspond to the AP are an optimal downlink receive antenna and an optimal downlink receive sector.

### (1.2) RSS phase

The RSS phase may include a responder transmit sector sweep (responder transmission of sector sweep, R-TXSS) subphase and/or a responder receive sector sweep (responder reception of sector sweep, R-RXSS) subphase. FIG. 4 is illustrated by using an example in which the RSS phase includes the R-TXSS subphase.

In the R-TXSS subphase, the STA may directionally transmit a plurality of SSW frames in a high frequency band, for example, an SSW frame 4, an SSW frame 5, and an SSW frame 6, to perform transmit sector training of the STA; and correspondingly, the AP may quasi-omnidirectionally receive at least one SSW frame from the STA in the high frequency band, and then the AP may determine an optimal transmit antenna and an optimal transmit sector that are of the STA and that correspond to the AP, and feed back, to the STA, an identifier of the optimal transmit antenna and an identifier of the optimal transmit sector (for example, the identifiers may be fed back to the STA by using a sector sweep feedback frame).

In the R-RXSS subphase, the STA may quasi-omnidirectionally transmit a plurality of SSW frames in a high frequency band, to perform receive sector training of the STA; and correspondingly, the AP may directionally receive at least one SSW frame in the high frequency band, and then the AP may determine an optimal receive antenna and an optimal receive sector that are of the AP and that correspond to the STA.

It may be understood that the RSS (that is, the R-TXSS and/or the R-RXSS) may also be referred to as uplink beamforming training (uplink beamforming training, UL BFT). The optimal transmit antenna and the optimal transmit sector that are of the STA and that correspond to the AP are an optimal uplink transmit antenna and an optimal uplink transmit sector. The optimal receive antenna and the optimal receive sector that are of the AP and that correspond to the STA are an optimal uplink receive antenna and an optimal uplink receive sector.

In embodiments of this application, "directionally transmitting" may mean alternately transmitting in different transmit sectors through different transmit antennas, and "directionally receiving" may mean alternately receiving in different receive sectors through different receive antennas.

### (1.3) Transmission phase of the sector sweep feedback frame

In the transmission phase of the sector sweep feedback frame, the AP may transmit the sector sweep feedback frame to the STA in a high frequency band based on an optimal transmit antenna and an optimal transmit sector that are of the AP and that correspond to the STA. The sector sweep feedback frame includes an identifier of the optimal transmit antenna that is of the STA and that corresponds to the AP and an identifier of the optimal transmit sector that is of the STA and that corresponds to the AP.

### (1.4) Transmission phase of the sector sweep acknowledgment frame

In the transmission phase of the sector sweep acknowledgment frame, the STA may transmit the sector sweep acknowledgment frame to the AP in a high frequency band based on an optimal transmit antenna and an optimal transmit sector that are of the STA and that correspond to the AP.

In this way, a result of the SLS phase may be acknowledged by using the sector sweep feedback frame and the sector sweep acknowledgment frame. In addition, whether a BRP process needs to be performed may be further determined by using the sector sweep feedback frame and the sector sweep acknowledgment frame.

It may be understood that the SLS process may include a plurality of the foregoing four phases, or the BRP process may be performed after a round of the foregoing four phases. Beamforming training in the BRP process is different from beamforming training in the SLS process. For the beamforming training in the BRP process, refer to the conventional technology. This is not limited in embodiments of this application.

### (2) Beacon interval

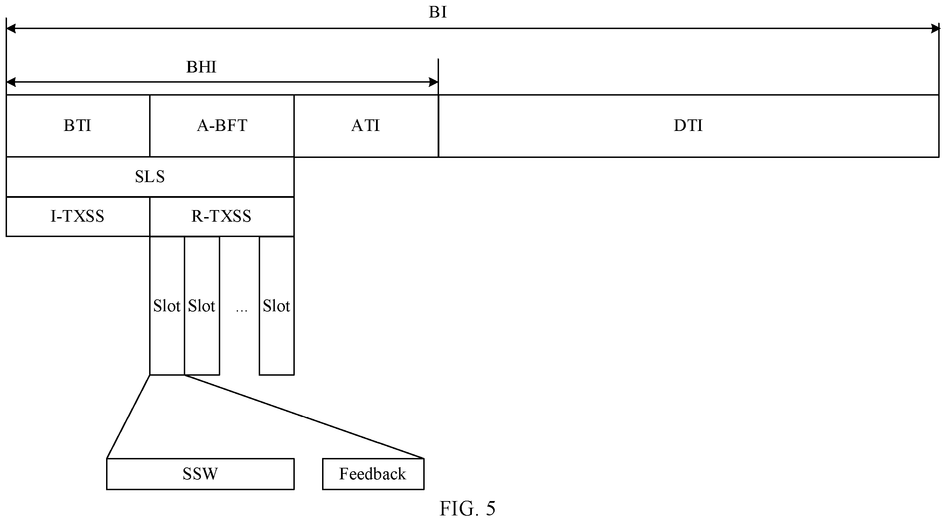

The beacon interval is introduced in the high frequency communication protocols (for example, the 802.11ad and 802.11ay protocols). FIG. 5 is a diagram of a structure of a beacon interval. As shown in FIG. 5, the beacon interval is divided into a beacon header indication (beacon header indication, BHI) and a data transmission interval (data transmission interval, DTI). The BHI includes a BTI, A-BFT, and an announcement transmission interval (announcement transmission interval, ATI).

The BTI is a time interval starting from time at which an AP transmits a first DMG beacon frame in the beacon interval to time at which transmission of a last DMG beacon frame ends in the same beacon interval. A plurality of DMG beacon frames transmitted by the AP in the BTI may be used for an ISS.

The A-BFT may be used for an RSS and association between a plurality of STAs and the AP; and frames transmitted in an A-BFT interval may include an SSW frame, an SSW feedback frame (or a short SSW frame and a short SSW feedback frame), and the like.

The ATI is used by the AP to poll buffered data information to a STA, used by the AP to transmit an announcement (for example, a management frame), or used by the AP to allocate resources in the DTI to the STA.

The DTI may be divided into several subintervals, and the several subintervals may be classified into a contention-based access period (contention-based access period, CBAP) and a service period (service period, SP) based on different access forms. The CBAP is a transmission time period in which the STA accesses a channel through contention, and the SP is a transmission time period in which scheduling is performed and contention does not need to be performed.

The following describes implementations in the BTI and the A-BFT in detail.

### (2.1) BTI

As described above, an ISS includes an I-TXSS and/or an I-RXSS. In a possible implementation, an AP may perform the I-TXSS in the BTI, that is, the AP may directionally transmit a plurality of DMG beacon frames in a broadcast manner in the BTI; and correspondingly, after quasi-omnidirectionally receiving at least one DMG beacon frame in the BTI, each of a plurality of STAs may determine, based on receiving quality of the at least one DMG beacon frame, an optimal transmit antenna and an optimal transmit sector that are of the AP and that correspond to each STA.

For example, the plurality of STAs include a STA 1, a STA 2, and a STA3. After quasi-omnidirectionally receiving at least one DMG beacon frame in the BTI, the STA 1 may determine, based on receiving quality of the at least one DMG beacon frame, an optimal transmit antenna and an optimal transmit sector that are of the AP and that correspond to the STA 1; after quasi-omnidirectionally receiving at least one DMG beacon frame in the BTI, the STA 2 may determine, based on receiving quality of the at least one DMG beacon frame, an optimal transmit antenna and an optimal transmit sector that are of the AP and that correspond to the STA 2; and after quasi-omnidirectionally receiving at least one DMG beacon frame in the BTI, the STA 3 may determine, based on receiving quality of the at least one DMG beacon frame, an optimal transmit antenna and an optimal transmit sector that are of the AP and that correspond to the STA 3.

### (2.2) A-BFT

An A-BFT interval may include a plurality of A-BFT slots (slots for short). For example, if the A-BFT interval includes eight slots, it may be understood that a length of the A-BFT is 8.

The plurality of STAs (for example, the STA 1, the STA 2, and the STA 3) each may select a slot in the A-BFT interval through contention, and communicate with an AP in the selected slot. For example, the plurality of STAs each may select the slot in the A-BFT interval through random backoff. For example, the STA 1 selects a slot 0, the STA 2 selects a slot 3, and the STA 3 selects a slot 5.

The STA 1 is used as an example. The STA 1 may communicate with the AP in the slot 0. Specifically, in a possible implementation, the STA 1 may perform the R-TXSS in the slot 0, that is, the STA 1 may directionally transmit a plurality of SSW frames to the AP in the slot 0; and correspondingly, after quasi-omnidirectionally receiving at least one SSW frame from the STA 1, the AP may determine, based on receiving quality of the at least one SSW frame, an optimal transmit antenna and an optimal transmit sector that are of the STA 1 and that correspond to the AP, and transmit an SSW feedback frame to the STA 1 in the slot 0. The SSW feedback frame includes an identifier of the optimal transmit antenna that is of the STA 1 and that corresponds to the AP and an identifier of the optimal transmit sector that is of the STA 1 and that corresponds to the AP.

It can be learned from the foregoing description that the plurality of STAs select slots in the A-BFT interval through contention. However, when the plurality of STAs select the slots in the A-BFT interval through contention, a contention conflict may occur (for example, two or more STAs select a same slot). As a result, communication between the STAs and the AP is affected. For example, both the STA 1 and the STA 2 select the slot 0 through contention. In this case, both the STA 1 and the STA 2 communicate with the AP in the slot 0. Consequently, communication between the AP and the STA 1 and communication between the AP and the STA 2 may be abnormal.

Based on this, embodiments of this application provide a communication method in which an AP may indicate, to a STA, a time domain resource allocated to the STA from a time domain resource set, so that the AP and the STA can communicate with each other on the allocated time domain resource. This avoids a contention conflict caused when a plurality of STAs select slots through contention in the time domain resource set.

The following describes in detail the communication method provided in embodiments of this application with reference to Embodiment 1 to Embodiment 4. In Embodiment 1 to Embodiment 4, an example in which the method provided in embodiments of this application is applied to the network architecture shown in FIG. 1 is used. In addition, the method may be performed by two communication apparatuses. The two communication apparatuses are, for example, a first communication apparatus and a second communication apparatus. The first communication apparatus may be an AP or a communication apparatus that can support an AP in implementing functions required by the method, or certainly may be another communication apparatus, for example, a chip or a chip system. The second communication apparatus may be a STA or a communication apparatus that can support a STA in implementing functions required by the method, or certainly may be another communication apparatus, for example, a chip or a chip system. For ease of description, the following uses an example in which the method is performed by an AP and a STA. In other words, an example in which the first communication apparatus is an AP and the second communication apparatus is a STA is used.

### Embodiment 1

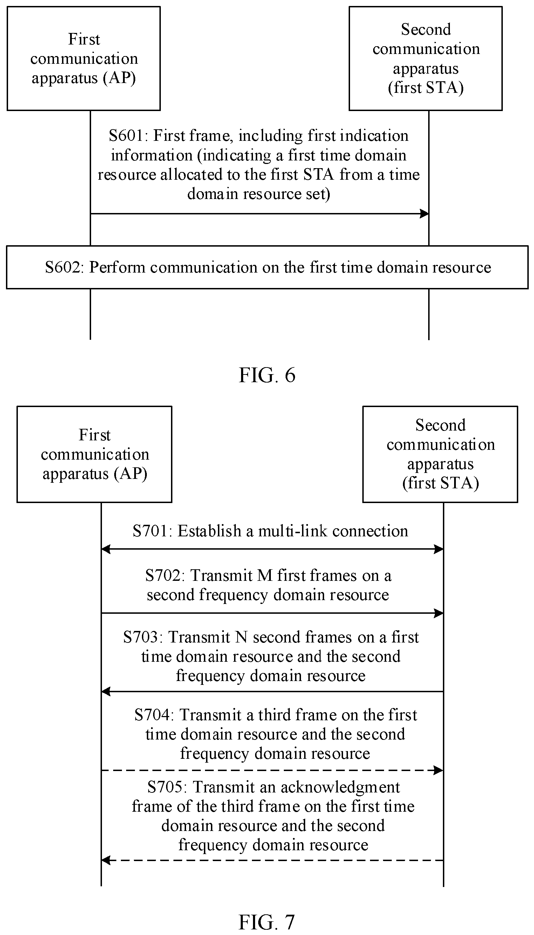

FIG. 6 is a schematic flowchart corresponding to a communication method according to Embodiment 1 of this application. As shown in FIG. 6, the procedure may include the following steps.

S601: An AP transmits a first frame, where the first frame includes first indication information, and the first indication information indicates a first time domain resource allocated to a first STA from a time domain resource set; and correspondingly, the first STA receives the first frame.

Herein, the time domain resource set may include a time domain resource used to perform beamforming training in an association process. For example, the time domain resource set may be an A-BFT interval, and the first time domain resource may include at least one slot in the A-BFT interval.

For example, the AP may transmit the first frame on a first frequency domain resource or a second frequency domain resource. The first frequency domain resource is different from the second frequency domain resource, and a frequency corresponding to the first frequency domain resource is less than a frequency corresponding to the second frequency domain resource. A frequency domain resource may be understood as a frequency range, and that the frequency corresponding to the first frequency domain resource is less than the frequency corresponding to the second frequency domain resource may mean that a highest frequency corresponding to the first frequency domain resource is less than a lowest frequency corresponding to the second frequency domain resource. For example, the first frequency domain resource is a frequency domain resource in a low frequency band, and the second frequency domain resource is a frequency domain resource in a high frequency band.

For example, the first indication information may include slot allocation information (represented as A-BFT slot allocation), the slot allocation information may include a plurality of bits, and each bit corresponds to one slot in the A-BFT interval. For example, if the A-BFT interval includes eight slots (that is, a slot 0 to a slot 7), the slot allocation information may include eight bits (that is, a bit 0 to a bit 7), the bit 0 corresponds to the slot 0, the bit 1 corresponds to the slot 1, and the rest may be deduced by analogy. The bit 0 is used as an example. When a value of the bit 0 is 1, it indicates that the first time domain resource allocated by the AP to the first STA includes the slot 0, or when a value of the bit 0 is 0, it indicates that the first time domain resource allocated by the AP to the first STA does not include the slot 0; or vice versa.

Optionally, the first indication information further includes other possible information, for example, further includes address information of the first STA.

S602: The AP communicates with the first STA on the first time domain resource.

For example, that the AP communicates with the first STA on the first time domain resource may include: The first STA transmits a second frame to the AP on the first time domain resource and the second frequency domain resource, where the second frame is used for first beamforming training, for example, the first beamforming training may be a responder sector sweep (that is, a responder transmit sector sweep and/or a responder receive sector sweep). Optionally, when the first beamforming training is the responder transmit sector sweep, that the AP communicates with the first STA on the first time domain resource may further include: The AP transmits a third frame to the first STA on the first time domain resource and the second frequency domain resource, where the third frame includes feedback information of the first beamforming training. For example, the feedback information of the first beamforming training includes an identifier of an optimal transmit antenna that is of the first STA and that corresponds to the AP and an identifier of an optimal transmit sector that is of the first STA and that corresponds to the AP.

According to the foregoing method, the AP may indicate, to the first STA, a time domain resource allocated to the first STA from the time domain resource set, and then the AP and the first STA may communicate with each other on the allocated time domain resource. Compared with a manner in which a plurality of STAs select slots from the time domain resource set through contention, this embodiment of the present invention can effectively avoid a communication exception caused by a contention conflict, and improve efficiency of communication between the AP and the first STA. In addition, when the plurality of STAs select the slots in the time domain resource set through contention, some slots may not be selected. As a result, resources are wasted. However, according to the foregoing method, the AP allocates the time domain resource to the STA, so that a waste of resources caused by contention can be avoided, and utilization of the time domain resource in the time domain resource set can be improved.

The following describes a specific implementation of Embodiment 1 with reference to Embodiment 2 to Embodiment 4.

### Embodiment 2

In Embodiment 2, both an AP and a STA may be MLDs. For example, the AP is an AP MLD, and the STA is a non-AP MLD.

FIG. 7 is a schematic flowchart corresponding to a communication method according to Embodiment 2 of this application. As shown in FIG. 7, the procedure may include the following steps.

S701: An AP establishes a multi-link connection to a first STA.

For example, the AP may separately establish multi-link connections to a plurality of STAs. The plurality of STAs include the first STA, and optionally, further include a second STA. The first STA is used as an example. After establishing the multi-link connection to the first STA, the AP may obtain high frequency link information of the first STA, and may further determine that the first STA supports a high frequency link.

S702: The AP transmits M first frames on a second frequency domain resource, where the M first frames are used for second beamforming training; and correspondingly, the first STA receives at least one of the M first frames on the second frequency domain resource, where M is a positive integer.
(1) A related implementation in which the AP transmits the M first frames is described.

For example, the AP may transmit the M first frames on the second frequency domain resource in a broadcast or multicast manner. Correspondingly, the plurality of STAs (for example, the first STA and the second STA) may receive at least one of the M first frames on the second frequency domain resource.

For example, the second beamforming training may be an initiator sector sweep (that is, an initiator transmit sector sweep and/or an initiator receive sector sweep). The AP may directionally transmit the M first frames on the second frequency domain resource, where the M first frames are used for the initiator transmit sector sweep. For example, the AP may separately transmit the M first frames in M transmit sectors of the AP on the second frequency domain resource, that is, transmit one first frame in each transmit sector. This helps reduce sector sweep overheads. Certainly, the AP may alternatively transmit a plurality of first frames in each transmit sector. In this embodiment of this application, an example in which the AP transmits one first frame in each transmit sector is used. It may be understood that the AP may alternatively quasi-omnidirectionally transmit the M first frames on the second frequency domain resource, where the M first frames are used for the initiator receive sector sweep. In Embodiment 2, an example in which the M first frames are used for the initiator transmit sector sweep is used.

For example, the AP may transmit the M first frames in a BTI, and the BTI is adjacent to the A-BFT interval.

For example, before transmitting the M first frames, the AP may determine a STA that needs to perform communication in the A-BFT interval. For example, the AP may determine, from a plurality of STAs supporting a high frequency link, a STA that needs to communicate with the AP in the A-BFT interval. There may be a plurality of specific implementations in which the AP determines whether a STA in the plurality of STAs needs to perform communication in the A-BFT interval. For example, the AP may determine whether the STA has performed an RSS; and if the STA has not performed the RSS, the AP may determine that the STA needs to perform communication in the A-BFT interval; or if the STA has performed the RSS, the AP may determine that the STA does not need to perform communication in the A-BFT interval. When the AP determines the plurality of STAs all need to perform communication in the A-BFT interval, the AP may allocate time domain resources to the plurality of STAs, and transmit the M first frames on the second frequency domain resource in a broadcast or multicast manner.

A specific implementation in which the AP allocates the time domain resources to the plurality of STAs is not limited in this embodiment of this application. For example, when the A-BFT interval includes eight slots, and 10 STAs need to perform communication in the A-BFT interval, the AP may select eight STAs from the 10 STAs, and allocate one slot to each of the eight STAs, and may not allocate a slot to the remaining two STAs.

(2) The first frame is described.

For example, the first frame may include indication information respectively corresponding to the plurality of STAs. For example, the first frame includes the first indication information corresponding to the first STA and second indication information corresponding to the second STA, the first indication information indicates the first time domain resource allocated to the first STA in the A-BFT interval, and the second indication information indicates a second time domain resource allocated to the second STA in the A-BFT interval.

There may be a plurality of implementations in which the first frame includes the indication information respectively corresponding to the plurality of STAs.

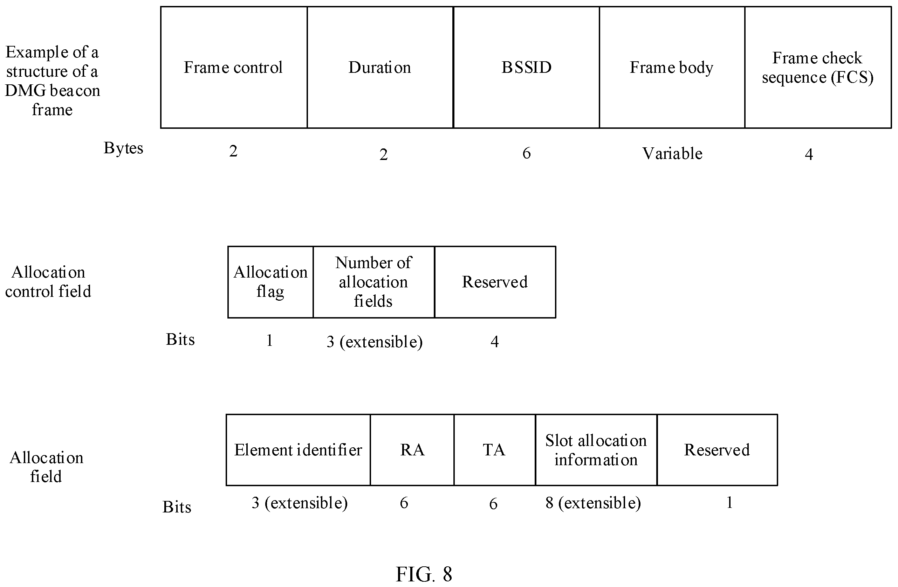

In a possible implementation, the first frame may be a DMG beacon frame, or may be another possible frame. For example, the first frame is the DMG beacon frame. FIG. 8 shows an example of a structure of the DMG beacon frame. As shown in FIG. 8, the DMG beacon frame may include a frame control (frame control) field, a duration (duration) field, a basic service set identifier (basic service set identification, BSSID) field, a frame body (frame body) field, and a frame check sequence (frame check sequence, FCS) field.

Still refer to FIG. 8. In this embodiment of this application, two new fields may be defined in the frame body field: an allocation control field (represented as A-BFT allocation control) and an allocation field (represented as A-BFT allocation). The allocation control field includes an allocation flag (allocation flag), a number of allocation fields (number of A-BFT allocations), and a reserved field. The allocation field may include an element identifier (element ID), a receiver address (receiver address, RA), a transmitter address (transmitter address, TA), slot allocation information (A-BFT slot allocation), and a reserved field. For specific meanings of these fields, refer to Table 1.

**Table 1: Meanings of fields**

| Field name | Meaning |
|---|---|
| allocation flag | The field may include one bit. When a value of the bit is 0, it indicates that the STA selects an A-BFT slot through contention; or when a value of the bit is 1, it indicates that the AP schedules an A-BFT slot for the STA. |
| number of A-BFT allocations | The field indicates a number of A-BFT allocation fields. When a value of the allocation flag is 0, a number of A-BFT allocation fields is 0; or when a value of the allocation flag is 1, a number of A-BFT allocation fields is not 0. |
| element ID | The field indicates a number of the A-BFT allocation field. |
| RA | The field indicates address information of the STA (for example, a MAC address of a non-AP MLD). |
| TA | The field indicates address information of the AP (for example, a MAC address of an AP MLD). |
| A-BFT slot allocation | The field may include a plurality of bits, and each bit corresponds to one slot in the A-BFT interval. For details, refer to the foregoing descriptions. |

In an example, if the first frame includes the first indication information and the second indication information, a value of the allocation flag is 1, and the number of A-BFT allocations indicates that there are two A-BFT allocation fields, that is, an A-BFT allocation field 1 and an A-BFT allocation field 2 respectively.

In the A-BFT allocation field 1, a RA field includes address information of the first STA, a TA field includes address information of the AP, and an A-BFT slot allocation field includes 10000000 (that is, a slot allocated by the AP to the first STA is a slot 0).

In the A-BFT allocation field 2, a RA field includes address information of the second STA, a TA field includes address information of the AP, and an A-BFT slot allocation field includes 01000000 (that is, a slot allocated by the AP to the second STA is a slot 1).

In this way, from a perspective of the STA, after receiving at least one of the M first frames, the first STA may determine, based on the A-BFT allocation field 1 carried in the first frame, that the slot allocated by the AP to the first STA is the slot 0; and after receiving at least one of the M first frames, the second STA may determine, based on the A-BFT allocation field 2 carried in the first frame, that the slot allocated by the AP to the first STA is the slot 1.

In addition, the frame body field in the first frame may further include an SSW field, and the SSW field may include an identifier of a transmit sector used to transmit the first frame and an identifier of a transmit antenna used to transmit the first frame. Further, the first STA may further determine, based on receiving quality of the at least one first frame, an optimal transmit antenna and an optimal transmit sector that are of the AP and that correspond to the first STA; and similarly, the second STA may further determine, based on receiving quality of the at least one first frame, an optimal transmit antenna and an optimal transmit sector that are of the AP and that correspond to the second STA.

It may be understood that although the AP directionally transmits the M first frames on the second frequency domain resource, the STA (for example, the first STA or the second STA) may receive the M first frames, or may receive only a 1^{st} frame in the M first frames. In addition, quantities of first frames received by different STAs may also be different.

S703: The first STA transmits N second frames to the AP on the first time domain resource and the second frequency domain resource, where the N second frames are used for second beamforming training; and correspondingly, the AP may receive at least one of the N second frames on the first time domain resource and the second frequency domain resource. N is a positive integer.

For example, in an example in which the second beamforming training is a responder transmit sector sweep, that is, the N second frames are used for the responder transmit sector sweep, the first STA may directionally transmit the N second frames. For example, the second frame may include an identifier of an optimal transmit antenna that is of the AP and that corresponds to the second STA and an identifier of an optimal transmit sector that is of the AP and that corresponds to the second STA. The second frame may be an SSW frame, or may be another possible frame (for example, a short SSW frame). This is not specifically limited. Correspondingly, the AP may quasi-omnidirectionally receive at least one of the N second frames, and determine, based on receiving quality of the at least one second frame, an optimal transmit antenna and an optimal transmit sector that are of the first STA and that correspond to the AP.

It may be understood that the first STA is used as an example herein. Similarly, the second STA may transmit a plurality of SSW frames to the AP on the second time domain resource and the second frequency domain resource, and the plurality of SSW frames are used for a sector sweep of the second STA.

Optionally, when the N second frames are used for the responder transmit sector sweep, the method may further include the following steps.

S704: The AP transmits a third frame to the first STA on the first time domain resource and the second frequency domain resource, where the third frame includes feedback information of the first beamforming training; and correspondingly, the first STA receives the third frame on the first time domain resource and the second frequency domain resource.

Herein, feedback information of the responder transmit sector sweep indicates an optimal transmit antenna and an optimal transmit sector that are of the first STA and that correspond to the AP. For example, the feedback information of the responder transmit sector sweep includes an identifier of the optimal transmit antenna that is of the first STA and that corresponds to the AP and an identifier of the optimal transmit sector that is of the first STA and that corresponds to the AP.

S705: The first STA transmits an acknowledgment frame of the third frame to the AP on the first time domain resource and the second frequency domain resource.

In other words, the AP may transmit the third frame in a high frequency band on the first time domain resource, and the first STA may transmit the acknowledgment frame of the third frame in the high frequency band on the first time domain resource. For example, the third frame may be an SSW feedback frame, and the acknowledgment frame of the third frame may be an SSW acknowledgment frame; or the third frame and the acknowledgment frame of the third frame may be other possible frames.

In another possible embodiment, the AP may alternatively transmit the third frame to the first STA on the first frequency domain resource, and the first STA may alternatively transmit the acknowledgment frame of the third frame to the AP on the first frequency domain resource. In other words, the AP may transmit the third frame in a low frequency band, and the first STA may transmit the acknowledgment frame of the third frame in the low frequency band. In this embodiment of this application, time domain resources occupied by the acknowledgment frame of the third frame and the third frame that are transmitted in the low frequency band are not limited.

According to the foregoing method, the first indication information may be carried in a frame (for example, a DMG beacon frame) used for an initiator sector sweep. In other words, the AP may transmit the slot allocation information to the first STA by using the DMG beacon frame. This is easy to implement. In addition, the AP does not need to transmit the slot allocation information by using an additional frame. This saves transmission resources.

### Embodiment 3

In Embodiment 3, both an AP and a STA may be MLDs. For example, the AP is an AP MLD, and the STA is a non-AP MLD.

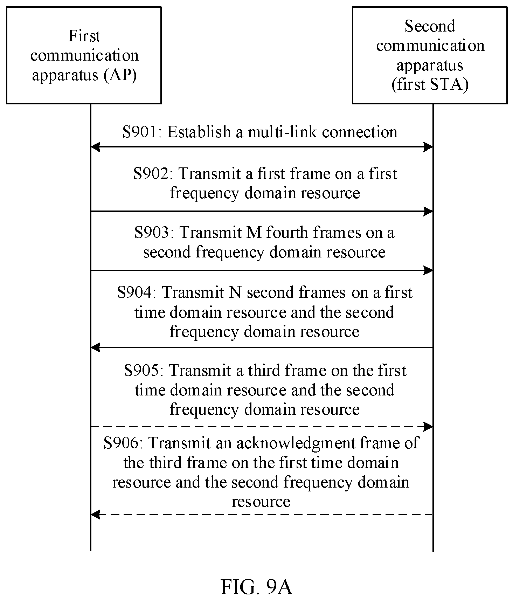

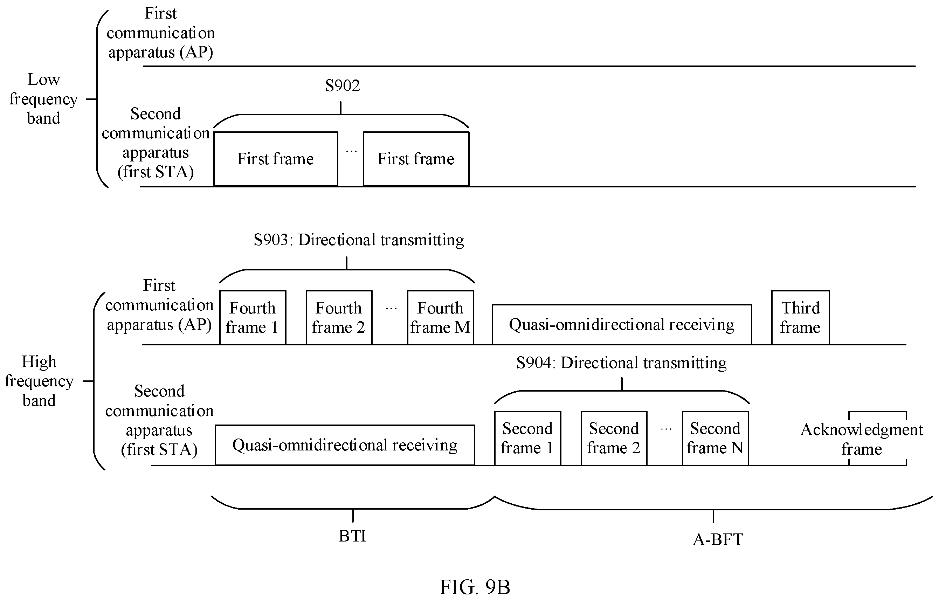

FIG. 9A and FIG. 9B each are a schematic flowchart corresponding to a communication method according to Embodiment 3 of this application. As shown in FIG. 9A and FIG. 9B, the procedure may include the following steps.

S901: An AP establishes a multi-link connection to a first STA.

For example, the AP may separately establish multi-link connections to a plurality of STAs. The plurality of STAs include the first STA, and optionally, further include a second STA. For details, refer to descriptions of S701 in Embodiment 2.

S902: The AP transmits a first frame to the first STA on a first frequency domain resource, where the first frame includes first indication information, and the first indication information indicates a first time domain resource allocated to the first STA from a time domain resource set; and correspondingly, the first STA receives the first frame.

In other words, the AP may transmit the first frame to the first STA in a low frequency band, and the first STA may receive the first frame in the low frequency band.

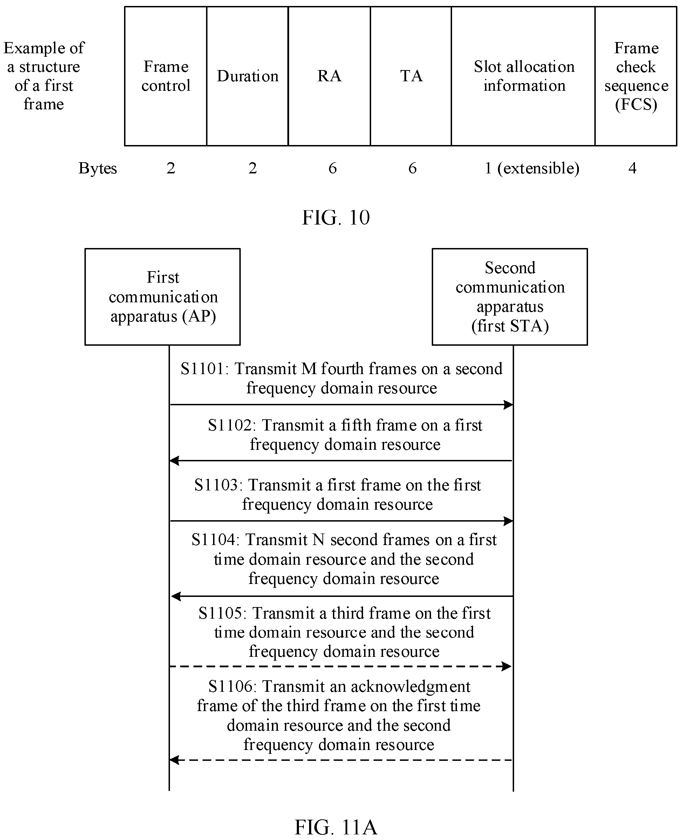

In a possible implementation, the first frame may be a frame newly designed in this embodiment of this application. For example, the first frame may be referred to as an A-BFT allocation poll (A-BFT slot allocation poll) frame. FIG. 10 is an example of a structure of the first frame according to an embodiment of this application. As shown in FIG. 10, the first frame includes a frame control field, a duration field, an RA field, a TA field, an A-BFT slot allocation field, and an FCS field. For a meaning of the A-BFT slot allocation field, refer to the foregoing descriptions. For example, the RA field in the first frame includes address information of the first STA, the TA field includes address information of the AP, and the A-BFT slot allocation field includes 10000000 (that is, a slot allocated by the AP to the first STA is a slot 0).

For example, the AP may transmit the first frame to the first STA in a unicast manner; and correspondingly, after receiving the first frame, the first STA may determine, based on the first frame, that the slot allocated by the AP to the first STA is the slot 0.

In this embodiment of this application, a time domain resource occupied by the first frame transmitted in the low frequency band is not limited. For example, the time domain resource occupied by the first frame is before start time of an A-BFT interval, so that the first STA can learn, before the start time of the A-BFT interval, a time domain resource allocated by the AP to the first STA.

It may be understood that the AP may further transmit another A-BFT slot allocation poll frame to another STA on the first frequency domain resource. For example, the AP may further transmit an A-BFT slot allocation poll frame a to the second STA on the first frequency domain resource, where the A-BFT slot allocation poll frame a includes second indication information. In other words, the AP may separately transmit the A-BFT slot allocation poll frame to the plurality of STAs on the first frequency domain resource.

S903: The AP transmits M fourth frames on a second frequency domain resource, where the M fourth frames are used for second beamforming training; and correspondingly, the first STA receives at least one of the M fourth frames on the second frequency domain resource.

For example, the fourth frame may be a DMG beacon frame, or may be another possible frame.

For a specific implementation in which the AP transmits the M fourth frames on the second frequency domain resource, refer to descriptions in Embodiment 2 in which the AP transmits the M first frames on the second frequency domain resource. A difference lies in that the first frame in Embodiment 2 includes the first indication information, but the fourth frame in Embodiment 3 may not include the first indication information.

S904: The first STA transmits N second frames to the AP on the first time domain resource and the second frequency domain resource, where the N second frames are used for first beamforming training; and correspondingly, the AP may receive at least one of the N second frames on the first time domain resource and the second frequency domain resource.

Optionally, when the N second frames are used for a responder transmit sector sweep, the method may further include the following steps.

S905: The AP transmits a third frame to the first STA on the first time domain resource and the second frequency domain resource, where the third frame includes feedback information of the first beamforming training; and correspondingly, the first STA receives the third frame on the first time domain resource and the second frequency domain resource.

S906: The first STA transmits an acknowledgment frame of the third frame to the AP on the first time domain resource and the second frequency domain resource.

For specific implementations of S904 to S906, refer to S703 to S705 in Embodiment 2.

According to the foregoing method, the AP may transmit slot allocation information to the first STA in a low frequency band. Because a coverage area of the low frequency band is large, a probability that the first STA successfully receives the slot allocation information can be increased.

### Embodiment 4

In Embodiment 4, both an AP and a STA may be DBDC devices.

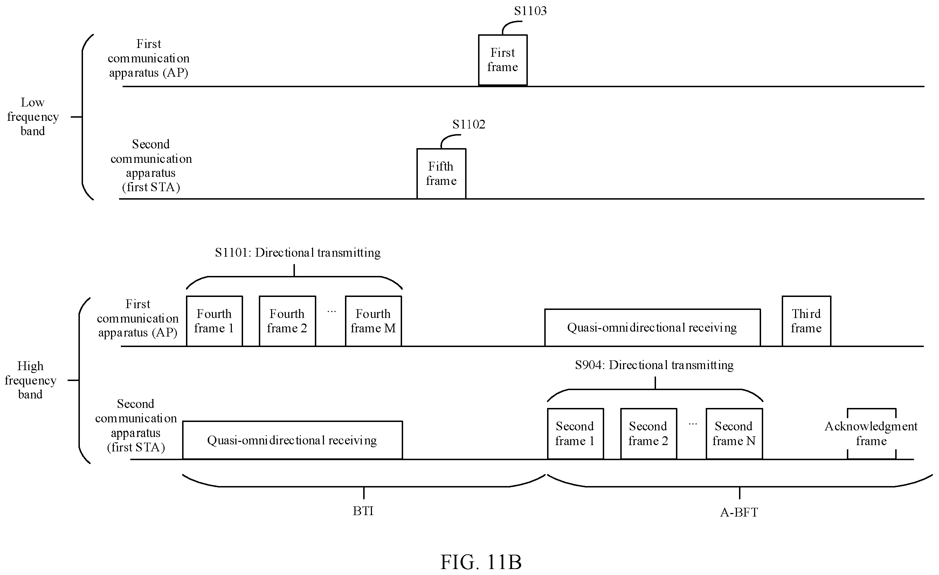

FIG. 11A and FIG. 11B each are a schematic flowchart corresponding to a communication method according to Embodiment 4 of this application. As shown in FIG. 11A and FIG. 11B, the procedure may include the following steps.

S1101: An AP transmits M fourth frames on a second frequency domain resource, where the M fourth frames are used for second beamforming training; and correspondingly, a first STA receives at least one of the M fourth frames on the second frequency domain resource.

Herein, for a specific implementation in which the AP transmits the M fourth frames on the second frequency domain resource, refer to Embodiment 3.

S1102: The first STA transmits a fifth frame to the AP on a first frequency domain resource, where the fifth frame includes feedback information of the second beamforming training; and correspondingly, the AP receives the fifth frame from the first STA on the first frequency domain resource.

For example, the second beamforming training is an initiator transmit sector sweep. The feedback information of the second beamforming training indicates an optimal transmit antenna and an optimal transmit sector that are of the AP and that correspond to the first STA.

For example, after determining the optimal transmit antenna and the optimal transmit sector that are of the AP and that correspond to the first STA, the first STA may establish a low frequency band link to the AP (or the first STA has previously established a low frequency band link to the AP), and transmit the fifth frame to the AP in a low frequency band. Correspondingly, after the AP receives the fifth frame in the low frequency band, because the fifth frame includes the feedback information of the second beamforming training, the AP may determine, based on the fifth frame, that the first STA supports a high frequency link, and allocate a first time domain resource in an A-BFT interval to the first STA. In other words, the feedback information of the second beamforming training indicates that the first STA supports the high frequency link (that is, supports the second frequency domain resource).

Optionally, after receiving the fifth frame from the first STA on the first frequency domain resource, the AP may further transmit an acknowledgment frame of the fifth frame to the first STA on the first frequency domain resource.

S1103: The AP transmits a first frame to the first STA on the first frequency domain resource, where the first frame includes first indication information.

Herein, for a specific implementation in which the AP transmits the first frame to the first STA on the first frequency domain resource, refer to S902 in Embodiment 3.

It may be understood that, in another possible embodiment, S1103 may be replaced with the following: The AP transmits the first frame to the first STA on the second frequency domain resource, where the first frame includes the first indication information. For example, after the AP receives the fifth frame from the first STA on the first frequency domain resource, because the fifth frame includes feedback information of an initiator transmit sector sweep, the AP may transmit the first frame to the first STA based on the optimal transmit antenna and the optimal transmit sector that are of the AP and that correspond to the first STA. That is, the AP may transmit the first frame to the first STA in the optimal transmit sector through the optimal transmit antenna in a high frequency band.

S1104: The first STA transmits N second frames to the AP on the first time domain resource and the second frequency domain resource, where the N second frames are used for first beamforming training; and correspondingly, the AP may receive at least one of the N second frames on the first time domain resource and the second frequency domain resource.

Optionally, when the N second frames are used for a responder transmit sector sweep, the method further includes the following steps.

S1105: The AP transmits a third frame to the first STA on the first time domain resource and the second frequency domain resource, where the third frame includes feedback information of the first beamforming training; and correspondingly, the first STA receives the third frame on the first time domain resource and the second frequency domain resource.

S1106: The first STA transmits an acknowledgment frame of the third frame to the AP on the first time domain resource and the second frequency domain resource.

For specific implementations of S1104 to S1106, refer to S703 to S705 in Embodiment 2.

According to the foregoing method, the AP may transmit slot allocation information to the first STA in a low frequency band. Because a coverage area of the low frequency band is large, a probability that the first STA successfully receives the slot allocation information can be increased. Alternatively, the AP may transmit, in a high frequency band, the slot allocation information to the first STA based on the optimal transmit antenna and the optimal transmit sector that are of the AP and that correspond to the first STA, so that a probability that the first STA successfully receives the slot allocation information can be increased.

For Embodiment 1 to Embodiment 4, it may be understood that:
(1) The foregoing focuses on differences between different embodiments in Embodiment 1 to Embodiment 4. For other content except the differences, mutual reference may be made between Embodiment 1 to Embodiment 4. In addition, in a same embodiment, mutual reference may also be made between different implementations or different examples.
(2) Step numbers in the flowcharts described in Embodiment 1 to Embodiment 4 are merely examples of executing procedures and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts based on an actual requirement, or another possible step may be added to the flowcharts based on an actual requirement.

The foregoing mainly describes the solutions provided in embodiments of this application from a perspective of interaction between communication apparatuses. It may be understood that, to implement the foregoing functions, the first communication apparatus and the second communication apparatus may include corresponding hardware structures and/or software modules for performing the functions. A person skilled in the art should be easily aware that, in combination with units and algorithm steps in the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

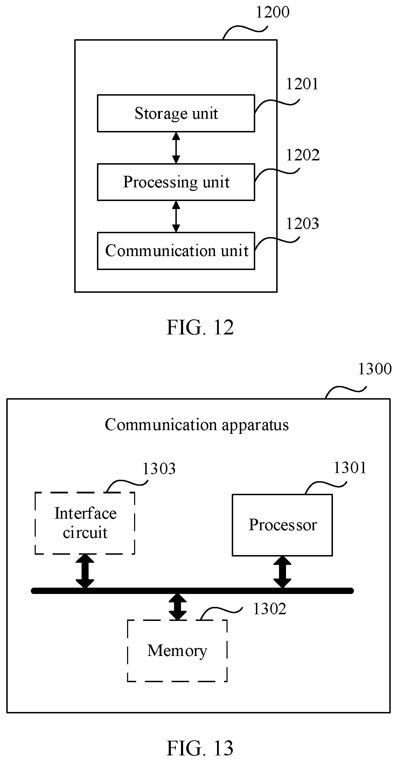

FIG. 12 is a possible example block diagram of an apparatus according to an embodiment of this application. As shown in FIG. 12, an apparatus 1200 may include a processing unit 1202 and a communication unit 1203. The processing unit 1202 is configured to control and manage an action of the apparatus 1200. The communication unit 1203 is configured to support the apparatus 1200 in communicating with another device. Optionally, the communication unit 1203 is also referred to as a transceiver unit, and may include a receiving unit and/or a transmitting unit, and the receiving unit and the transmitting unit are respectively configured to perform a receiving operation and a transmitting operation. The apparatus 1200 may further include a storage unit 1201 that is configured to store program code and/or data of the apparatus 1200.

The apparatus 1200 may be the first communication apparatus (for example, an AP) in the foregoing embodiments, or may be a component (for example, a circuit or a chip) disposed in an AP. The processing unit 1202 may support the apparatus 1200 in performing actions of the AP in the foregoing method examples. Alternatively, the processing unit 1202 mainly performs internal actions of the AP in the method examples, and the communication unit 1203 may support communication between the apparatus 1200 and another device.

For example, in an embodiment, the communication unit 1203 is configured to: transmit a first frame, where the first frame includes first indication information, the first indication information indicates a first time domain resource allocated to a second communication apparatus from a time domain resource set, and the time domain resource set includes a time domain resource used to perform beamforming training in an association process; and communicate with the second communication apparatus on the first time domain resource.

The apparatus 1200 may be the second communication apparatus (for example, a STA) in the foregoing embodiments, or may be a component (for example, a circuit or a chip) disposed in a STA. The processing unit 1202 may support the apparatus 1200 in performing actions of the STA in the foregoing method examples. Alternatively, the processing unit 1202 mainly performs internal actions of the STA in the method examples, and the communication unit 1203 may support communication between the apparatus 1200 and another device.

In an embodiment, the communication unit 1203 is configured to: receive a first frame from a first communication apparatus, where the first frame includes first indication information, the first indication information indicates a first time domain resource allocated to the second communication apparatus from a time domain resource set, and the time domain resource set includes a time domain resource used to perform beamforming training in an association process; and communicate with the first communication apparatus on the first time domain resource.

It should be understood that division into the units in the foregoing apparatus is merely logical function division, and during actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program, and may be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form of scheduling a program by a processing element, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for transmitting is an interface circuit of the apparatus, and is configured to transmit a signal to another apparatus. For example, when the apparatus is implemented in a manner of a chip, the transmitting unit is an interface circuit that is of the chip and that is configured to transmit a signal to another chip or apparatus.

FIG. 13 is a diagram of a structure of a communication apparatus according to an embodiment of this application. The communication apparatus is configured to implement operations of the first communication apparatus (for example, an AP) in the foregoing embodiments.

As shown in FIG. 13, a communication apparatus 1300 may include a processor 1301, a memory 1302, and an interface circuit 1303. The processor 1301 may be configured to: process a communication protocol and communication data, and control the communication apparatus 1300. The memory 1302 may be configured to store a program and data, and the processor 1301 may perform, based on the program, the method performed by the AP in embodiments of this application. The interface circuit 1303 may be used by the communication apparatus 1300 to communicate with another device, the communication may be wired communication or wireless communication, and the interface circuit may alternatively be replaced with a transceiver.

Alternatively, the memory 1302 may be externally connected to the communication apparatus 1300. In this case, the communication apparatus 1300 may include the interface circuit 1303 and the processor 1301. Alternatively, the interface circuit 1303 may be externally connected to the communication apparatus 1300. In this case, the communication apparatus 1300 may include the memory 1302 and the processor 1301. When both the interface circuit 1303 and the memory 1302 are externally connected to the communication apparatus 1300, the communication apparatus 1300 may include the processor 1301.

The communication apparatus shown in FIG. 13 can implement processes related to the AP in the foregoing method embodiments. Operations and/or functions of modules in the communication apparatus shown in FIG. 13 are separately used to implement corresponding procedures in the foregoing method embodiments. For details, refer to descriptions in the foregoing method embodiments. To avoid repetition, detailed descriptions are properly omitted herein.

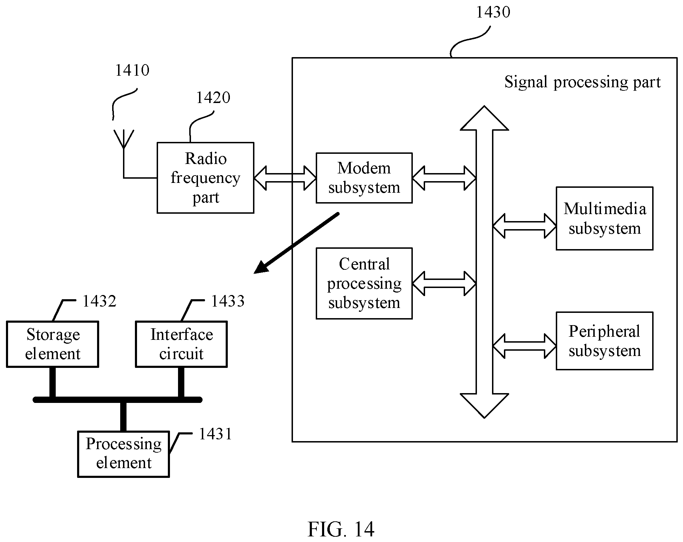

FIG. 14 is a diagram of a structure of a communication apparatus according to an embodiment of this application. The communication apparatus is configured to implement operations of the second communication apparatus (for example, a STA) in the foregoing embodiments. As shown in FIG. 14, the communication apparatus includes an antenna 1410, a radio frequency part 1420, and a signal processing part 1430. The antenna 1410 is connected to the radio frequency part 1420. In a downlink direction, the radio frequency part 1420 receives, through the antenna 1410, information transmitted by an AP, and transmits the information transmitted by the AP to the signal processing part 1430 for processing. In an uplink direction, the signal processing part 1430 processes information about a STA, and transmits the information to the radio frequency part 1420, and after processing the information about the STA, the radio frequency part 1420 transmits the information to the AP through the antenna 1410.

The signal processing part 1430 may include a modem subsystem configured to process data at communication protocol layers, and may further include a central processing subsystem configured to process an operating system and an application layer of the STA. In addition, the signal processing part 1430 may further include another subsystem, for example, a multimedia subsystem or a peripheral subsystem. The multimedia subsystem is configured to control a camera, screen display, and the like, and the peripheral subsystem is configured to connect to another device. The modem subsystem may be a separately disposed chip.

The modem subsystem may include one or more processing elements 1431, for example, include a main control CPU and another integrated circuit. In addition, the modem subsystem may further include a storage element 1432 and an interface circuit 1433. The storage element 1432 is configured to store data and a program. However, the program used to perform methods performed by the STA in the foregoing methods may not be stored in the storage element 1432, but is stored in a memory outside the modem subsystem, and when the program is used, the program is loaded and used by the modem subsystem. The interface circuit 1433 is configured to communicate with another subsystem.

The modem subsystem may be implemented by using a chip. The chip includes at least one processing element and an interface circuit. The processing element is configured to perform steps of any method performed by the STA, and the interface circuit is configured to communicate with another apparatus. In an implementation, units that are of the STA and that implement the steps in the foregoing methods may be implemented in a form of scheduling a program by a processing element. For example, an apparatus used in the STA includes a processing element and a storage element, and the processing element invokes a program stored in the storage element, to perform the methods performed by the STA in the foregoing method embodiments. The storage element may be a storage element located on a same chip as the processing element, that is, an on-chip storage element.

In another implementation, a program used to perform the methods performed by the STA in the foregoing methods may be in a storage element located on a chip different from the processing element, that is, an off-chip storage element. In this case, the processing element invokes or loads the program from the off-chip storage element to the on-chip storage element, to invoke and perform the methods performed by the STA in the foregoing method embodiments.

In still another implementation, units that are of the STA and that implement the steps in the foregoing methods may be configured as one or more processing elements, these processing elements are disposed on the modem subsystem, and the processing elements herein may be integrated circuits, for example, one or more ASICs, one or more DSPs, one or more FPGAs, or a combination of these integrated circuits. These integrated circuits may be integrated together to form a chip.

Units that are of the STA and that implement the steps in the foregoing methods may be integrated together and implemented in a form of an SOC, and the SOC chip is configured to implement the foregoing methods. At least one processing element and a storage element may be integrated into the chip, and the processing element invokes a program stored in the storage element to implement the foregoing methods performed by the STA; or at least one integrated circuit may be integrated into the chip, to implement the foregoing methods performed by the STA; or with reference to the foregoing implementations, functions of some units are implemented in a form of invoking a program by the processing element, and functions of some units are implemented in a form of an integrated circuit.

It can be learned that the foregoing apparatus used for the STA may include at least one processing element and an interface circuit, and the at least one processing element is configured to perform any method performed by the STA in the foregoing method embodiments. The processing element may perform some or all of the steps performed by the STA in a first manner, that is, by invoking a program stored in the storage element; or may perform some or all of the steps performed by the STA in a second manner, that is, by using a hardware integrated logic circuit in a processor element in combination with instructions. Certainly, some or all of the steps performed by the STA may also be performed by combining the first manner and the second manner.

The processing element herein is the same as that in the foregoing descriptions, and may be implemented by using a processor. A function of the processing element may be the same as a function of the processing unit described in FIG. 12. For example, the processing element may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 12. The storage element may be a memory, or may be a general name of a plurality of memories.

The STA shown in FIG. 14 can implement processes related to the STA in the foregoing method embodiments. Operations and/or functions of modules in the STA shown in FIG. 14 are separately used to implement corresponding procedures in the foregoing method embodiments. For details, refer to descriptions in the foregoing method embodiments. To avoid repetition, detailed descriptions are properly omitted herein.

An embodiment of this application further provides a communication system. The communication system may include an AP and a STA, the AP is configured to perform AP-side steps in the foregoing method embodiments, and the STA is configured to perform STA-side steps in the foregoing method embodiments.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
transmitting, by a first communication apparatus, a first frame, wherein the first frame comprises first indication information, the first indication information indicates a first time domain resource allocated to a second communication apparatus from a time domain resource set, and the time domain resource set comprises a time domain resource used to perform beamforming training in an association process; and
communicating, by the first communication apparatus, with the second communication apparatus on the first time domain resource.

2. The method according to claim 1, wherein the communicating, by the first communication apparatus, with the second communication apparatus on the first time domain resource comprises:
receiving, by the first communication apparatus, a second frame from the second communication apparatus on the first time domain resource, wherein the second frame is used for first beamforming training.

3. The method according to claim 2, wherein the communicating, by the first communication apparatus, with the second communication apparatus on the first time domain resource further comprises:
transmitting, by the first communication apparatus, a third frame to the second communication apparatus on the first time domain resource, wherein the third frame comprises feedback information of the first beamforming training.

4. The method according to any one of claims 1 to 3, wherein the transmitting, by a first communication apparatus, a first frame comprises:
transmitting, by the first communication apparatus, the first frame on a first frequency domain resource or a second frequency domain resource, wherein
a frequency corresponding to the first frequency domain resource is less than a frequency corresponding to the second frequency domain resource.

5. The method according to claim 4, wherein when the first communication apparatus transmits the first frame on the second frequency domain resource, the first frame is further used for second beamforming training.

6. The method according to claim 5, wherein the first frame further comprises second indication information, and the second indication information indicates a second time domain resource allocated to a third communication apparatus from the time domain resource set.

7. The method according to claim 4, wherein when the first communication apparatus transmits the first frame on the first frequency domain resource, the method further comprises:
transmitting, by the first communication apparatus, a fourth frame on the second frequency domain resource, wherein the fourth frame is used for second beamforming training.

8. The method according to claim 4, wherein before the transmitting, by the first communication apparatus, the first frame on a first frequency domain resource or a second frequency domain resource, the method further comprises:
transmitting, by the first communication apparatus, a fourth frame on the second frequency domain resource, wherein the fourth frame is used for second beamforming training; and
receiving, by the first communication apparatus, a fifth frame from the second communication apparatus on the first frequency domain resource, wherein the fifth frame comprises feedback information of the second beamforming training.

9. The method according to claim 8, wherein the feedback information indicates an optimal transmit antenna and/or an optimal transmit sector that are/is of the first communication apparatus on the second frequency domain resource and that correspond/corresponds to the second communication apparatus; and
the transmitting, by the first communication apparatus, the first frame on a second frequency domain resource comprises:
transmitting, by the first communication apparatus, the first frame on the second frequency domain resource based on the optimal transmit antenna and/or the optimal transmit sector.

10. A communication method, wherein the method comprises:
receiving, by a second communication apparatus, a first frame from a first communication apparatus, wherein the first frame comprises first indication information, the first indication information indicates a first time domain resource allocated to the second communication apparatus from a time domain resource set, and the time domain resource set comprises a time domain resource used to perform beamforming training in an association process; and
communicating, by the second communication apparatus, with the first communication apparatus on the first time domain resource.

11. The method according to claim 10, wherein the communicating, by the second communication apparatus, with the first communication apparatus on the first time domain resource comprises:
transmitting, by the second communication apparatus, a second frame to the first communication apparatus on the first time domain resource, wherein the second frame is used for first beamforming training.

12. The method according to claim 11, wherein the communicating, by the second communication apparatus, with the first communication apparatus on the first time domain resource further comprises:
receiving, by the second communication apparatus, a third frame from the first communication apparatus on the first time domain resource, wherein the third frame comprises feedback information of the first beamforming training.

13. The method according to any one of claims 10 to 12, wherein the receiving, by a second communication apparatus, a first frame from a first communication apparatus comprises:
receiving, by the second communication apparatus, the first frame from the first communication apparatus on a first frequency domain resource or a second frequency domain resource, wherein
a frequency corresponding to the first frequency domain resource is less than a frequency corresponding to the second frequency domain resource.

14. The method according to claim 13, wherein when the second communication apparatus receives the first frame from the first communication apparatus on the second frequency domain resource, the first frame is further used for second beamforming training.

15. The method according to claim 13, wherein when the second communication apparatus receives the first frame from the first communication apparatus on the first frequency domain resource, the method further comprises:
receiving, by the second communication apparatus, a fourth frame from the first communication apparatus on the second frequency domain resource, wherein the fourth frame is used for second beamforming training.

16. The method according to claim 13, wherein before the receiving, by the second communication apparatus, the first frame from the first communication apparatus on a first frequency domain resource or a second frequency domain resource, the method further comprises:
receiving, by the second communication apparatus, a fourth frame from the first communication apparatus on the second frequency domain resource, wherein the fourth frame is used for second beamforming training; and
transmitting, by the second communication apparatus, a fifth frame to the first communication apparatus on the first frequency domain resource, wherein the fifth frame comprises feedback information of the second beamforming training.

17. A communication apparatus, comprising a processor, wherein the processor is coupled to a memory, the memory stores a computer program, and the processor is configured to invoke the computer program in the memory, to enable the communication apparatus to perform the method according to any one of claims 1 to 9 or the method according to any one of claims 10 to 16.

18. A computer-readable storage medium, wherein the storage medium stores a computer program or instructions, and when the computer program or the instructions are executed by a computer, the method according to any one of claims 1 to 9 or the method according to any one of claims 10 to 16 is implemented.

19. A computer program product, wherein when a computer reads and executes the computer program product, the computer is enabled to perform the method according to any one of claims 1 to 9 or the method according to any one of claims 10 to 16.
